# EUROPEAN PATENT APPLICATION

(11) **EP 2 495 833 A1**
(43) Date of publication of application: **05.09.2012**
(21) Application number: 11001732.4
(22) Date of filing: 02.03.2011
(51) Int. Cl.: H02B 13/00, H02B 1/20

(54) **Solid insulated busbar arrangement, especially for medium voltage switchgear**

(71) Applicant: ABB Technology AG, 8050 Zürich (CH)
(72) Inventor: Vogels, Lukas, 40878 Ratingen (DE); Hyrenbach, Maik, Dr.-Ing., 70878 Ratingen (DE)
(74) Representative: Schmidt, Karl Michael

(57) **Abstract**

Solid insulated busbar arrangement for a medium voltage application comprising at least one metal busbar (2a - 2d), wherein a summarized electrically connection of at least two feeders (10a - 10c) to the external busbar (2a - 2d) by an external busbar or busbar system, wherein the at least two feeders (10a - 10c) are arranged inside a common gas insulating compartment (6).

## Description

### Field of the invention

The invention relates to a solid insulated busbar arrangement for a medium voltage application comprising at least two metal busbars which are coaxially connected one to another by a T-connector made of an elastic insulating material comprising a bushing for electrically connecting at least one feeder panel which is adjacently arranged to the busbar line inside a gas insulating compartment.

### Background of the invention

Medium voltage switchgear is an integrated assembly of switches, busses and fuses, which are coordinated electrically and mechanically for medium voltage circuit protection. The metal -enclosed switchgear provides safe, reliable switching and fault protection for a medium voltage circuit rated from 2.4kV through 38kV. Usually, the medium voltage switchgear can be applied for many switching duties whether manual, motor operated or automatic operation is specified for transformer primary switching, powered distribution switching and other purposes. Modern gas insulated medium voltage switchgear comprises a maintenance-free high voltage technology, plug-in connections requiring no gas work, sensors for signal acquisition and motorised operating mechanisms for remote control.

The document DE 2 240 492 A1 discloses a medium voltage 3-phase circuit breaker for single pole switching with a casting resin casing comprising a plurality of parts, conductors which extend from contacts to the 3-phase output terminals, the conductors being encapsulated in a rear wall part of the set casing, a front casing part which has mounted thereon busbars and contacts, and individually removable switching elements cooperating with the contacts on the two casing parts so as to connect the 3-phase conductors to the busbars.

A busbar system is arranged in line inside a common housing. The solid insulated busbars are assembled one to another between tubular conductors of switching elements. Special busbar contacts which are mounted on the busbar are provided for an electrical connection to the conductor of the switching element. The busbars are mounted by means of clamps on the housing.

Special switchgear installations use external busbars which are arranged outside the feeder panels forming the switchgear by mounting the single feeder panels one to another. Usually, gas insulated circuit breakers are integrated in the feeder panels. In order to connect the circuit breakers with the external busbar line individual bushings are necessary. The bushings are integrated in T-connectors made of an elastic insulating material to connect to busbars and the bushing of a feeder panel located beside the busbar line. Further end-connectors made of an elastic insulating material are necessary to connect the ends of the busbar line and the bushing of the feeder panels located on the front sides of the switchgear arrangement in order to insulate the end of the busbar line. Thus, the busbar line is connecting each feeder panel by using a set of connections and bushings per feeder panel.

Known switchgear using solid insulated busbar lines suffer from various disadvantages, more particularly from the high number of outgoing feeders with a comparable low nominal current are individually connected to the busbar line by individual sets of connections. These connections are expensive and have a negative impact to the production process of large switchgear equipment.

Therefore it is an object of the present invention to provide a solid insulated busbar arrangement for a medium voltage application, especially for medium voltage switchgear in a module design, which comprises a low number of individual electrical parts.

### Summary of the invention

According to the invention a bushing is provided with a summarized electrically connection of at least two feeders to the external busbar by an external busbar or busbar system, wherein the at least two feeders are arranged inside a common gas insulating compartment.

The advantage of the invention is that only one electrical connection set is required to the external busbar line since the effort of the bushing is lower than an individual connecting solution. In addition the usage of a common gas compartment for 2, 3, 4 or more feeders will decrease the effort for the compartment material, the expensive gas filling and monitoring. Furthermore, due to the bushing solution a more compact compartment design is possible. The invention provides two or more feeders in a common gas compartment and which are using only one electrical connection to the external solid insulated busbar line.

According to another favourable aspect of the invention an internal busbar section is also fully arranged inside the common gas insulating compartment. The special internal busbar section distributes the current from the single bushing to each feeder. Thus, the current is split to each feeder panel internally and not - according to the prior art - externally via respective bushings.

According to preferred embodiment of the present invention the common gas insulating compartment comprises a triple internal busbar section for electrically connecting three feeders . Thus, such as triple feeder encapsulation can be realised in a pre-mounted module, and the production effort is much lower than of three feeding panels which are later unconnected.

Preferably, the common gas insulating compartment is filled with a sulphur hexafluoride gas (SF6) in order to realise a high level of electrical insulation. However, it is also possible to use another insulating gas, which is suitable for medium voltage applications.

For medium voltage applications the busbars to be connected one to another have a preferably circular cross section and consists of copper material. For a current of 1250 Ampere across section in the range of 30 to 34mm, preferably 32mm is recommended. For 2500 Ampere the cross section should be in the range 45 to 55mm, preferably 50mm.

The foregoing and other aspects of the invention will become apparent following the detailed description of the invention when considered in conjunction with the enclosed drawing.

The invention generates furthermore cost reduction, and results also in a compact construction.

In case of triple feeder panel only one encapsulation is need, instead of three encapsulations.

Furthermore only one gasmonitoring system instead of three is needed.

A further technical consequence is, that the external maximum busbar current is independent from the internal current.

### Brief description of the drawings

Figure 1 is a schematic showing the solid insulated busbar arrangement on the top of the switchgear,
Figure 2 is a single line diagram showing the principal on the example of the triple feeder panel, and
Figure 3 is a detailed schematic in the area of the triple feeder panel of Figure 1.

### Detailed description of the drawings

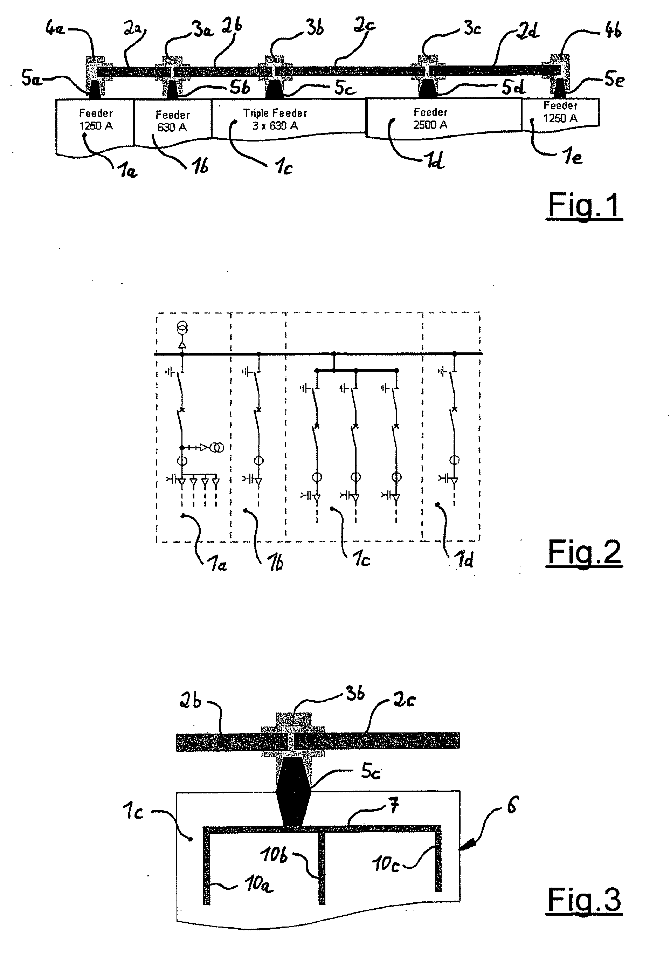

According to Figure 1, a medium voltage switchgear consists of one standard feeder panel 1a for 1250 Ampere current which is located at one front side of the switchgear. Another feeder panel 1 b is arranged beside the first feeder panel 1 a. It follows a special third feeder panel 1 c which is designed as a triple feeder panel for 3x 630 Ampere. A further standard feeder panel 1 d is adjacently arranged to the foregoing triple feeder panel 1 c. Finally, at the other front side another standard feeder panel 1 e for 1250 Amperes is arranged.

All feeder panels 1a - 1e are electrically connected to a line of several busbars 2a - 2d. The busbars 2a - 2d consists of copper and are coaxially connected one to another by respective T-connectors 3a - 3c. To both distil ends of the busbar line an end-connector 4a and 4b respectively is arranged. The T-connectors 3a - 3c as well as the end-connectors 4a and 4b are made of an elastic insulating material comprising respective bushing 5a - 5e for electrically connecting the several feeder panels 1a - 1 e to the busbars 2a - 2d.

The Figure 2 shows the principle of the arrangements as described above. The feeder panel 1 a is used as an incoming feeder against what the remaining feeder panels 1b - 1d are used as outgoing feeder panels. One of them, the feeder panel 1c, is designed as a triple feeder panel.

The triple feeder panel 1 c as illustrated in Figure 3 comprises the multi-bushing 5c which is used for a summarised electrical connection of three feeders 10a - 10c to the external busbar 2c at the right side, as well as to the busbar 2b at the left side of the busbar line. All feeders 10a - 10c are arranged inside a common gas insulating compartment 6 filled with sulphur hexafluoride gas.

The three feeders 10a - 10c are connected via an internal busbar section 7 which is also arranged inside the common gas insulating compartment 6. The internal busbar section 7 distributes the current from the single multi-bushing 5c to each feeder 10a - 10c. The three feeders 10a - 10c as well as its internal busbar section 7 and the surrounding common gas insulating compartment 6 form a pre-mounted module of the medium voltage switchgear arrangement.

### Reference List

- 1: Feeder panel
- 2: Busbar
- 3: T-connector
- 4: End-connector
- 5: Bushing
- 6: Gas Insulation compartment
- 7: Internal busbar section
- 10: Feeder

## Claims

1. Solid insulated busbar arrangement for a medium voltage application comprising at least one metal busbar (2a - 2d), **characterized by** a summarized electrically connection of at least two feeders (10a - 10c) to the external busbar (2a - 2d) by an external busbar or busbar system, wherein the at least two feeders (10a - 10c) are arranged inside a common gas insulating compartment (6).

2. Solid insulated busbar arrangement according to Claim 1,
**characterized in that** an internal busbar section (7) is arranged inside the common gas insulating compartment (6) for distributing the current from the single bushing (5c) to each feeder (10a - 10c).

3. Solid insulated busbar arrangement according to Claim 1,
**characterized in that** the common gas insulating compartment (6) with the internal busbar section (7) and two or more feeders (10a - 10c) are designed as a pre-mounted module.

4. Solid insulated busbar arrangement according to Claim 1,
**characterized in that** at least one standard bushing (5a, 5b, 5d, 5e) is adjacently arranged to the bushing (5c) on the same line of the external busbars (2a - 2d).

5. Solid insulated busbar arrangement according to Claim 1,
**characterized in that** the common gas insulation compartment (6) is filled with a sulfur hexafluoride gas.

6. Solid insulated busbar arrangement according to Claim 1,
**characterized in that** the coaxially connected metal busbars (2a - 2d) are made of a copper material.

7. Solid insulated busbar arrangement according to Claim 6,
**characterized in that** the coaxially connected copper busbars (2a - 2d) have a circular cross section in the range of 30 to 34 Millimeter in diameter for 1250 Ampere current.

8. Solid insulated busbar arrangement according to Claim 6,
**characterized in that** the coaxially connected copper busbars (2a - 2d) have a circular cross section in the range of 45 to 55 Millimeter in diameter for 2500 Ampere current.

9. Medium voltage switchgear comprising at least one gasinsulated circuit breaker which is electrically connected via a solid insulated busbar arrangement according to one of the preceeding Claims.

10. Medium voltage switchgear according to Claim 10,
**characterized in that** the external busbars (2a - 2d) are arranged on the top of the feeder panels (1a - 1 e) which are arranged one to another forming the switchgear unit.
